# EUROPEAN PATENT APPLICATION

(11) **EP 3 936 826 A2**
(43) Date of publication of application: **12.01.2022**
(21) Application number: 21199082.5
(22) Date of filing: 27.09.2021
(51) Int. Cl.: G01C 21/36, G01C 21/32

(54) **METHOD AND APPARATUS FOR VEHICLE NAVIGATION AND SYSTEM**

(30) Priority: 27.09.2020 CN 202011035193
(71) Applicant: Apollo Intelligent Connectivity (Beijing) Technology Co., Ltd., Beijing 100176 (CN)
(72) Inventor: Zhang, Zhuhua, Beijing, 100176 (CN); Liu, Nanke, Beijing, 100176 (CN)
(74) Representative: Maiwald Patent- und Rechtsanwaltsgesellschaft mbH

(57) **Abstract**

The disclosure discloses a method and an apparatus for vehicle navigation, a device, a system and a cloud control platform. The detailed implementation includes: receiving (302), by a remote control server, a plurality of pieces of first roadside related information encoded in a predetermined format, in which the first roadside related information at least includes position information of a road and driving related information related to the road; generating (304) second roadside related information according to the plurality of pieces of first roadside related information; and sending (306) the second roadside related information to a navigation function entity, in which the second roadside related information is configured for configuration of vehicle navigation information on the navigation function entity. The technical solution of the present disclosure improves connections between the vehicle, the road and the cloud, and improves safety and traffic efficiency of vehicle driving.

## Description

### FIELD

The disclosure relates to a field of automated driving, intelligent transportation and vehicle infrastructure cooperation technologies, and particularly relates to a method and an apparatus for vehicle navigation and a system.

### BACKGROUND

Recently, Intelligent Transportation System (ITS), as a brand-new technology, uses advanced science and technology to comprehensively consider involved roads, traffic, humans and environments, and realize intelligent traffic management, which may bring a possibility and a hope for solving traffic problems. With development of communication networks, particularly to deployment of fifth-generation (5G) communication networks, the ITS expects to support cooperative communication and interaction for "human-vehicle-road-cloud", which will provide different services for different types of vehicles (including high-level automated driving vehicles, connected vehicles with communication capabilities and existing public travel vehicles). There is currently a lack of such a solution for standardizing the cooperative interaction between the vehicles, the roads and the clouds.

### SUMMARY

The present disclosure provides a method and an apparatus for vehicle navigation and a system.

In a first aspect of the disclosure, a method for vehicle navigation is provided. The method includes: receiving, by a remote control server, a plurality of pieces of first roadside related information encoded in a predetermined format, in which the first roadside related information at least includes position information of a road and driving related information related to the road; and generating second roadside related information according to the plurality of pieces of first roadside related information; sending the second roadside related information to a navigation function entity, in which the second roadside related information is configured for configuration of vehicle navigation information on the navigation function entity.

In a second aspect of the disclosure, an apparatus for vehicle navigation is provided. The apparatus is configured to implement the method according to the first aspect of the disclosure.

In a third aspect of the disclosure, a method for vehicle navigation is provided. The method includes: receiving, by a navigation function entity, roadside related information from a remote control server, in which the roadside related information at least includes position information of a road and driving related information related to the road; and configuring information for vehicle navigation based on the roadside related information.

In a fourth aspect of the disclosure, an apparatus for vehicle navigation is provided. The apparatus includes: a second receiving module, configured to receive, by a navigation function entity, roadside related information from a remote control server, in which the roadside related information at least includes position information of a road and driving related information related to the road; and a configuring module, configured to configure information for vehicle navigation based on the roadside related information.

In a fifth aspect of the disclosure, a computer readable storage medium having a computer program stored thereon is provided. The computer program is configured to implement the method according to the first aspect or the third aspect of the disclosure when executed by a progress.

In a sixth aspect of the disclosure, a system for vehicle navigation is provided. The system for vehicle navigation includes one or more remote control servers including the apparatus according to the second aspect of the disclosure; and a navigation function entity including the apparatus according to the fourth aspect of the disclosure.

According to a method and an apparatus for vehicle navigation, a device, a system and a cloud control platform of embodiments of the present disclosure, Internet connections between vehicles, roads and clouds are provided, and driving safety and traffic efficiency are improved.

It should be understood that, the contents described in the Summary are not intended to identify key or important features of embodiments of the disclosure, nor is it intended to limit the scope of the disclosure. Other features of the disclosure will become apparent from the following description.

### BRIEF DESCRIPTION OF THE DRAWINGS

The above and other features, advantages and aspects of respective embodiments of the disclosure will become more apparent with reference to accompanying drawings and following detailed illustrations. In the accompanying drawings, the same or similar numeral references represent the same or similar elements, in which:
FIG. 1 is a schematic diagram illustrating an environment where multiple embodiments are implemented according to embodiments of the disclosure.
FIG. 2 is a block diagram illustrating a system for navigation according to embodiments of the disclosure.
FIG. 3 is a flow chart illustrating a method for navigation applied to a remote control server according to embodiments of the disclosure.
FIG. 4 is a flow chart illustrating a method for navigation applied to a navigation function entity according to embodiments of the disclosure.
FIG. 5 is a flow chart illustrating a method for navigation applied to a roadside device according to embodiments of the disclosure.
FIG. 6 is a block diagram illustrating an apparatus for navigation applied to a remote control server according to embodiments of the disclosure.
FIG. 7 is a block diagram illustrating an implement for remote control server according to embodiments of the disclosure.
FIG. 8 is a block diagram illustrating an apparatus for navigation applied to a navigation function entity according to embodiments of the disclosure.
FIG. 9 is a block diagram illustrating an apparatus for navigation applied to a roadside device according to embodiments of the disclosure.
FIG. 10 is a block diagram illustrating a device according to embodiments of the disclosure.

### DETAILED DESCRIPTION

Embodiments of the disclosure will be described in more detail below with reference to the accompanying drawings. Although certain embodiments of the disclosure are illustrated in the accompanying drawings, it should be understood that the disclosure may be implemented in various manners without being limited by the embodiments elaborated herein. On the contrary, embodiments are provided to make the disclosure more thorough and complete. It should be understood that, the accompanying drawings and embodiments of the disclosure are merely used for exemplary purposes, and are not used to limit the protection scope of the disclosure.

In the description of embodiments of the disclosure, the term "includes" and its equivalents should be understood as an open "include" (a non-exclusive "include"), that is, "include but not limited to". The term "based on" should be understood as "based at least in part (at least partially based on)". The term "an embodiment" or "the embodiment" should be understood as "at least one embodiment". The terms "first", "second", and the like may refer to different or the same objects. Other explicit and implicit definitions may also be included below.

As mentioned above, in an intelligent transportation system (ITS), cooperative communication and interaction for "vehicle-road-cloud" may realize intelligence of transportation. However, the intelligence of transportation is heavily dependent on connected degree and real-time performance of connection for "vehicle-road-cloud". From a view of connectivity, from traditional connection auxiliary information interaction (such as navigation information acquisition, etc.) to connection cooperation decision and control (with cooperation between vehicles to vehicles, and vehicles to roads, the vehicles are planned and controlled). A connectivity dimension of the transportation focuses on a degree of communication among participants such as vehicles to vehicles, vehicles to roads, vehicles to clouds, and vehicles to humans.

Existing connectivity usually focuses on v2x air interface communication or traditional telematics services, which has requirements for configurations of the vehicles itself, and require the vehicles to install dedicated on-board hardware for intelligent navigation and intelligent control (such as OBU or Tbox and other devices). However, because many of the existing transportation (such as vehicles) in markets are without connectivity or with initial connectivity functions, which makes degrees of cooperation communication and interaction of the "vehicle-road-cloud" low. Even if a certain degree of network connections may be achieved, the real-time performance of the connections is poor, and these connections may not be directly used for the navigation and driving control of the vehicles. Therefore, it is required to provide a way to allow vehicles with low levels of connectivity to participate in advanced connectivity, so as to further improve the intelligence and connectivity of the vehicles.

An improved solution of network connections is provided according to embodiments of the present disclosure. The solution may improve connectivity between a roadside device and a vehicle navigation function entity. It worth to mentioning that the "navigation function entity" herein refers to as a function entity that may provide real-time navigation information and/or services related to real-time navigation information. The information or information-related services may be used for navigation and/or driving control of vehicles because they are capable of ensuring the real-time performance of driving-related information in a map. As an example, the navigation function entity may be a map server configured to provide a map service, or may be a vehicle networking platform interconnected with vehicle terminals. According to the solution of network connections of embodiments of the present disclosure, roadside related information is encoded in a predetermined format and sent to a remote control server, and the remote control server sends the received roadside related information to the navigation function entity. The navigation function entity creates and/or configures information for the vehicle navigation based on the roadside related information. As a result, even if there is no dedicated vehicle-mounted equipment on the vehicles, the connectivity between the vehicle and the roadside devices may be realized. And even traditional vehicles without dedicated equipment for vehicle-road cooperation may still obtain functions of the vehicle-road cooperation and achieve compatibility of intelligent transportation solutions.

Hereinafter, embodiments of the present disclosure will be described in detail with reference to the accompanying drawings.

### Examples of environment

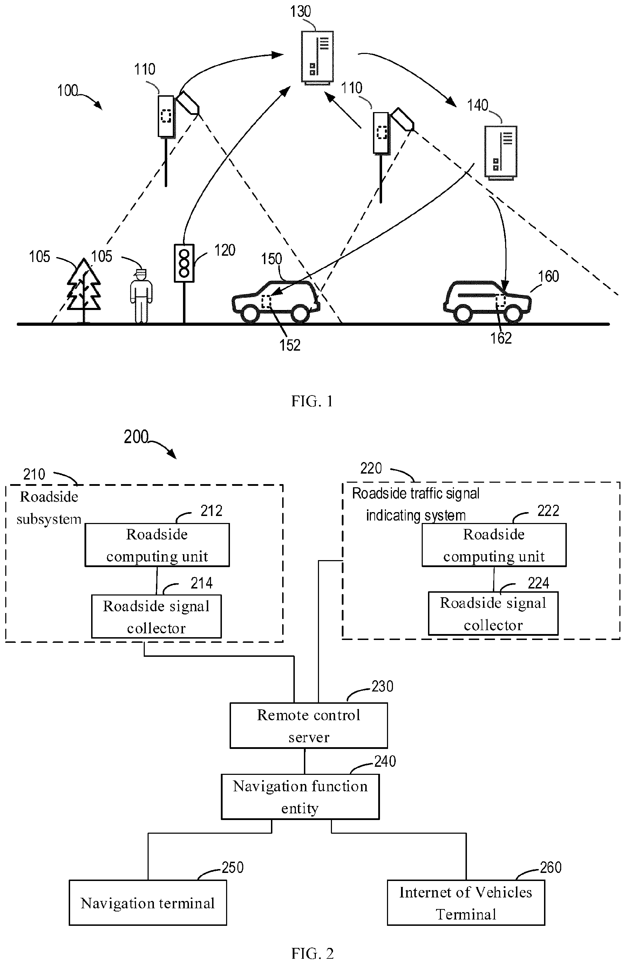

FIG. 1 illustrates a schematic diagram of an environment where multiple embodiments are implemented according to embodiments of the disclosure. An environment 100 in this example includes one or more means of transportation 150, 160. For convenient of description, the transportation 150 and 160 may be collectively or individually referred to as transportation or vehicles. As used herein, the transportation refers to any type of tool that is capable of carrying people and/or goods in and movable. In FIG. 1 and other drawings and descriptions herein, the transportation is illustrated as a vehicle. The vehicle may be a motor vehicle or a non-motor vehicle, examples of which include but are not limited to a car, a sedan, a truck, a bus, an electric car, a motorcycle, a bicycle, and so on. However, it should be understood that the vehicle is only an example of the transportation. Embodiments of the present disclosure are equally applicable to other transportation other than vehicles, such as a ship, a train, an airplane, and so on.

One or more means of transportation 150 in the environment 100 may be the transportation with a certain automated driving capability. In some embodiments, the transportation 150 may have an Internet of vehicles terminal device 152, and the Internet of vehicles terminal device 152 may have an ability to communicate with other devices based on one or more communication technologies, such as being capable of communicating with a remote navigation function entity (for example, an Internet of vehicles platform or a map server) for driving and navigation.

In some embodiments, other means of transportation 160 in the environment 100 may be transportation without automated driving capabilities or having driving assistance capabilities. Such transportation may be controlled by a driver. In some embodiments, the driver or vehicle may carry or be installed a navigation terminal 162, for example, a mobile terminal with networking capabilities; the navigation terminal 162 may be installed with a navigation application and interconnected with a navigation function entity (for example, the map server) to provide real-time information for driving or navigation of the transportation.

In addition to the two means of transportation 150 and 160, there may also be other objects in the environment 100 that affect the driving of the transportation, such as animals, plants 105, and humans 105. The environment 100 of FIG. 1 is also provided with a system for transportation navigation therein, which is configured to provide navigation for the transportation in the environment 100.

In the environment 100, the system for transportation navigation may include: one or more roadside subsystems 110; one or more roadside traffic signal indicating systems 120. The roadside subsystem 110 is configured to collect roadside related information, and the roadside related information may include position information of a road and driving related information related to the road. The roadside subsystems 110 are provided near a geographic area where the transportation 150 is traveling and/or parked. For example, the roadside subsystems 110 may be provided on both sides of the road at a certain interval or have a predetermined distance from positions where the transportation may appear. A large number of roadside subsystems 110 may be arranged in an entire city or a predetermined area of the city according to a detection range of each roadside subsystem 110, so as to realize coverage of the entire city or the predetermined area. The roadside traffic signal indicating system 120 is usually installed on urban roads and provides traffic signals to guide vehicles and/or pedestrians for proceeding. The roadside traffic signal indicating system 120 may include traffic signal lights, traffic guide lights, and other devices for indicating traffic using the traffic signals. These devices may be configured at intersections of roads and roads, intersections of roads and sidewalks, or above the lanes of the roads, on sides of the roads, and so on. A large number of roadside traffic signal indicating systems 120 are arranged in the city or the predetermined area, according to road planning and/or traffic safety requirements, to realize vehicle and/or pedestrian guidance in the city or the predetermined area.

The system for transportation navigation may include a remote control server 130 configured to be communicatively connected with the roadside subsystem 110 and/or the roadside traffic signal indicating system 120. In some embodiments, the remote control server 130 may collect driving-related information related to the road from all or part of the roadside subsystems 110 and the roadside traffic signal indicating system 120 in the city and/or regions. The remote control server 130 may provide the global real-time driving-related information related to the road of the entire city and/or the region. The remote control server 130 may be a server specially configured to collect the driving-related information related to the road. The remote control server may be a server, a network node such as a large server, a cloud computing device such as a virtual machine (VM), and any other device that provides computing capabilities. In a cloud environment, the remote control server may sometimes be called a cloud device, or may sometimes be called a cloud control platform, a vehicle-road cooperative management platform, a central subsystem, an edge computing platform, a cloud computing platform, etc.

The system for transportation navigation may include a navigation function entity 140 configured to be communicatively connected with the remote control server 130. The navigation function entity 140 may configure or create global real-time navigation information of the entire city and/or the region based on information sent by the remote control server 130. The navigation function entity 140 may be interconnected with the Internet of vehicles terminal device 152 of the vehicle 150, such that the Internet of vehicles terminal device 152 may realize real-time navigation routes and/or driving control planning. In addition, the navigation function entity 140 may also be interconnected with the Internet of vehicles terminal device 152 of the vehicle 150 and the navigation terminal 162 of the vehicle 160, so that the navigation terminal 162 may realize the real-time navigation routes and/or the driving control planning. The navigation function entity may also be a server, a network node such as a large-scale server, a cloud computing device such as a virtual machine (VM), and any other device that provides computing capabilities. As an example, the navigation function entity may be a map server, which may be configured to provide a map and/or navigation service to a connected device, and the Internet of vehicles terminal device 152 may be installed with navigation software for interacting with the navigation function entity such as the map server. The navigation function entity may also be the Internet of vehicles platform configured to provide the navigation service to the connected vehicle. The Internet of vehicles terminal device 152 may be installed with an on-board operating system for interacting with the navigation function entity such as the Internet of vehicles platform. The navigation function entity may sometimes be called a navigation platform, a navigation server, etc.

### Examples of system

FIG. 2 illustrates a block diagram of a system 200 for navigation according to embodiments of the disclosure. As illustrated in FIG. 2, the roadside subsystem 210 may include a roadside computing unit 212 and one or more roadside signal collectors 214; the roadside traffic signal indicating system 220 may include one or more roadside computing units 222 and one or more roadside signal collectors 224.

The roadside signal collector 214 is configured to monitor the environment 100 where the vehicles 150 and 160 are located and collect the roadside related information. For example, the roadside signal collector 214 may be configured to sense a road traffic state, a road condition, a weather condition, etc. within a sensing range of the environment 100, and input sensing data into the roadside computing unit 212. Although in the illustrated embodiment, the roadside subsystem 110 includes one roadside signal collector 214, in other embodiments, the roadside subsystem 110 may include multiple roadside signal collectors 214, according to an information processing capability of the roadside subsystem 110, to enable the roadside subsystem 110 to cover a larger region and/or a range. The roadside signal collector may also be called a roadside sensing device. The roadside device may include, for example, the roadside sensing device and a roadside computing device.

The roadside signal collector 214 may include one or more sensor units, which may be of the same type or different types, and may be distributed at the same position or different positions in the sensing range. An Example of the sensor unit in the roadside signal collector 214 may include, but not limited to: an image sensor (such as a camera), a lidar, a millimeter wave radar, an infrared sensor, a positioning sensor, an illuminance sensor, a pressure sensor, a temperature sensor, a humidity sensor, a wind speed sensor, a wind direction sensor, an air quality sensor, etc. The image sensor may collect image information. The lidar and millimeter-wave radar may collect laser point cloud data. The infrared sensor may detect environmental conditions in the environment through infrared. The positioning sensor may collect position information of an object. The illuminance sensor may collect a measurement value indicating an illuminance of the environment. The pressure sensor, temperature sensor and humidity sensor may respectively collect measurement values indicating a pressure, a temperature and a humidity respectively. The wind speed sensor and the wind direction sensor may respectively collect measurement values indicating a wind speed and a wind direction. The air quality sensor may collect some indicators related to air quality, such as an oxygen concentration, a carbon dioxide concentration, a dust concentration, and a pollutant concentration in air. It should be understood that only some examples of the sensor units are listed above. There may also be other types of sensors according to actual requirements.

The roadside computing unit 212 may be configured to provide computing and/or communication functions. The roadside computing unit 212 may be any device with a computing capability, such as one or more processors, a processing device, a general-purpose compute, and so on. Although in the illustrated embodiment, the roadside computing unit 212 is interconnected with one roadside signal collector 214, in other embodiments, the roadside computing unit 212 may be configured to obtain sensing data from multiple roadside signal collectors 214. The roadside computing unit 212 is configured to generate the roadside related information encoded in a predetermined format, and the roadside related information may include position information of a road and driving related information related to the road. The roadside computing unit 212 may determine an environment perception result related to the road through algorithms such as data fusion and obstacle sensing, and generate the roadside related information encoded in the predetermined format.

The roadside signal collector 224 may be configured to obtain a traffic signal for guiding road traffic. In some embodiments, the roadside signal collector 224 may communicate with the controller of the traffic signal indicating device to read the current traffic signal of the traffic signal indicating device. As an example, the roadside signal collector 224 may be connected to a signal controller of the traffic signal indicating device to read the traffic indicating signal from the controller. In some embodiments, the roadside signal collector 224 may communicate with a remote control center of the traffic signal indicating device to read the traffic indicating signal of the traffic signal indicating device from the remote control center.

The roadside computing unit 222 may be configured to provide computing and/or communication functions. The roadside computing unit 222 may be any device with a computing capability, such as one or more processors, a processing devices, a general-purpose compute, and so on. The roadside computing unit 222 may be configured to obtain information from the roadside signal collector 224, and generate the roadside related information encoded in the predetermined format based on the sensed information. The roadside related information may include the position information of the road and the driving-related information related to the road. It is worth noting that although in the illustrated embodiment, the roadside signal collector 224 and the roadside computing unit 222 are implemented as two components, the roadside signal collector 224 and the roadside computing unit 222 may be implemented by one or more components.

The remote control server 230 is communicatively connected to the roadside subsystem 210 and/or the roadside traffic signal indicating system 220 to receive the roadside related information encoded in the predetermined format from the roadside subsystem 210 and/or the roadside traffic signal indicating system 220. The remote control server 230 may be configured to send the roadside related information to the navigation function entity 240. In some embodiments, the navigation function entity 240 may configure or generate navigation information based on the roadside related information from the remote control server 230. In some embodiments, the navigation function entity 240 may be the map server, which may be configured to provide the navigation service and/or a navigation-related service to the navigation terminal 250, such as navigation route planning, vehicle driving lane setting, driving lane change, driving speed setting, driving speed change, etc. In some other embodiments, the navigation function entity 240 may be the Internet of vehicles platform, which may be configured to provide the navigation service and/or the navigation related service to the Internet of vehicles terminal 260.

### Examples of procedure

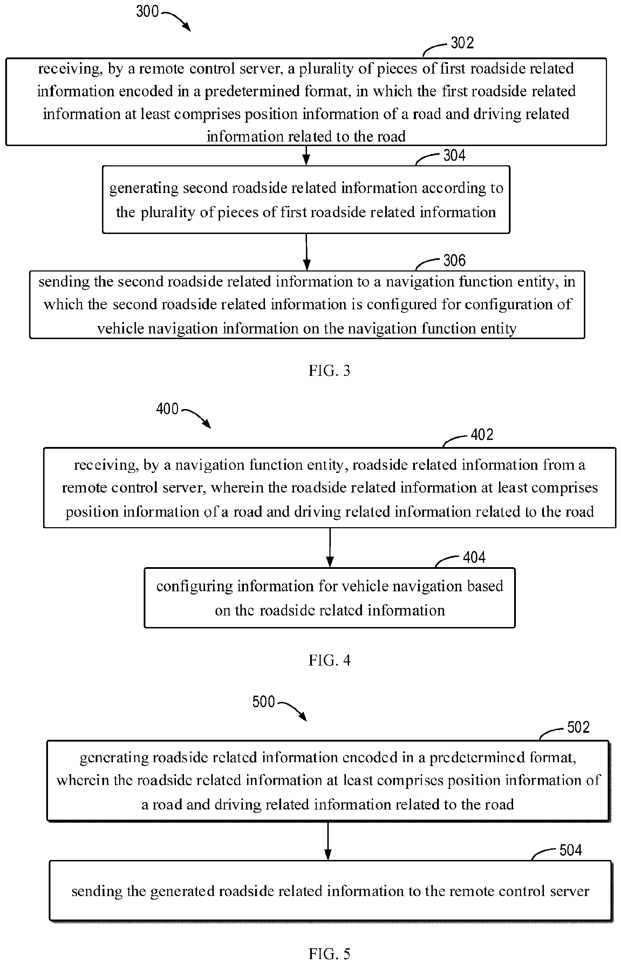

FIG. 3 illustrates a flowchart of a method 300 for navigation applied to a remote control server according to some embodiments of the present disclosure. The method 300 may be implemented for the remote control server 230 of FIG. 2. It should be understood that although the method 300 is illustrated in a specific order, some steps in the method 300 may be performed in a different order from the illustrated order or in a parallel manner. The embodiments of the present disclosure are not limited in this respect.

At block 302, a remote control server receives a plurality of pieces of first roadside related information encoded in a predetermined format. The first roadside related information may at least include position information of a road and driving related information related to the road. At block 304, second roadside related information is generated according to the plurality of pieces of first roadside related information. At block 306, the second roadside related information is sent to a navigation function entity. The second roadside related information may be configured for configuration of vehicle navigation information on the navigation function entity. The navigation function entity may configure information for the vehicle navigation based on the second roadside related information. Since the roadside related information is encoded in the predetermined format and is received by, for example, a remote control server, and is sent to the navigation function entity via the remote control server, transmission of the roadside related information is not limited by a side for transportation, and the roadside related information may be configured by the navigation function entity efficiently and in real time for the navigation of the transportation. Thus, security and navigation efficiency of the navigation is ensured. The first roadside related information may be encoded in various formats, for example, an appropriate data format may be adopted based on a device model of a roadside device, a communication protocol and/or standard supported by the roadside device, and a device standard or protocol. For example, without limitation, the data may be in a format such as PB or ASN. Similarly, the second roadside related information may adopt an appropriate data format, for example, the appropriate data format may be adopted based on a communication protocol and/or standard supported by the navigation function entity, and a related industry standard or protocol. For example, without limitation, the data may be in a format such PB or Jason.

In some embodiments, the first roadside related information includes one or more of a traffic event, a traffic flow, and a traffic indication signal. Thus, various kinds of data related to the vehicle navigation, which is related to the traffic event, the traffic flow, and the traffic indication device, etc., may be provided in real time to a remote server from, for example, the roadside device. As mentioned above, in some embodiments, a roadside system may collect a variety of information. With encoding the roadside related information from the roadside system in the predetermined format, the vehicle-road cooperative performance may be improved, for example, communication efficiency of road-to-vehicle may be improved and the amount of data processing may be reduced. In some embodiments, data interaction types of road-remote control server-navigation function entity include the traffic event, the traffic flow, and the traffic indication signal. Therefore, the navigation function entity may configure the driving-related information related to the road efficiently and in real time, such as navigation information or navigation-related information, to ensure real-timing of the information for navigation.

In some embodiments, the traffic event may indicate a variety of traffic event data. In some embodiments, the traffic event may indicate a road section and/or a lane affected by the traffic event. As an example, an area, the road section, and/or the lane where the traffic event occurs may be numbered according to a predetermined standard and/or protocol, and a related influence range may be obtained based on a number. In other examples, the area, the road section, and/or the lane where the traffic event occurs may be described based on a geographic position of the traffic event, such as a latitude and a longitude. For example, when the roadside related information indicates that a traffic event related to vehicle driving occurs on a certain road section, the traffic event information may indicate the affected road section and/or lane, and the navigation function entity may configure or generate vehicle navigation information, based on the related affected road section and/or lane, to instruct or prompt the vehicle to avoid the affected road section and/or lanes. Thus, an impact of the traffic event on the vehicle traffic is reduced.

In some embodiments, the traffic event may indicate a weather condition at a predetermined road section. In some embodiments, the weather condition may include rain, snow, fog, haze, hail, wind, sandstorm, and the like. For example, various kinds of weather conditions may be numbered according to a predetermined standard and/or protocol, and a corresponding weather condition may be obtained based on a number. As an example, when the roadside related information indicates that a weather condition related to vehicle driving occurs in the predetermined road section, information of the weather condition may indicate an affected road area, and the navigation function entity may configure or generate the vehicle navigation information, based on the related affected road area, to instruct or prompt the vehicle to avoid the area affected by the weather condition. Thus, an impact of the weather condition on the vehicle traffic is reduced.

In some embodiments, the traffic event may indicate a road condition at the road section and/or the lane. In some embodiments, the road condition may be selected from the road having an abandoned object, the road having a pedestrian, the road having an animal, the road being slippery, the road being icy, the road breaking out of fire, and a road facility being damaged. For example, various weather conditions may be numbered according to a predetermined standard and/or protocol, and a corresponding road condition may be obtained based on a number. As an example, when the roadside related information indicates that the spatter affecting the driving of the vehicle appears in a certain lane, the navigation function entity may configure or generate the vehicle navigation information, based on the road condition of the road with the spatter, to indicate or prompt the vehicle to avoid the lane affected by the road condition. Thus, an impact of the road condition on the vehicle traffic is reduced.

In some embodiments, the traffic event may indicate a vehicle condition at the road section and/or the lane. The vehicle condition may include, for example, an abnormal vehicle condition that affects the driving of the vehicle. For example, without limitation, the traffic event may indicate the vehicle driving beyond a predetermined speed threshold, the vehicle driving below a predetermined speed threshold, the vehicle stopping driving, the vehicle driving in a direction not allowed by traffic regulations, the emergency vehicle requiring priority access, and large vehicle identification. For example, various vehicle conditions may be numbered according to a predetermined standard and/or a protocol, and a corresponding vehicle condition may be obtained based on a number. As an example, when the roadside related information indicates that the abnormal vehicle condition occurs in a certain lane, the navigation function entity may configure or generate the vehicle navigation information based on the abnormal vehicle condition. For example, in some embodiments, when the roadside related information indicates that the abnormal vehicle condition (for example, the vehicle driving over speed, the vehicle stopping, the vehicle driving at low speed, the vehicle driving in the direction not allowed by traffic regulations) occurs, the navigation function entity may configure or generate the corresponding vehicle navigation information to indicate or prompt the vehicle to slow down or modify a navigation route to avoid the lane and/or the road with the abnormal vehicle condition. As an example, when the roadside related information indicates that a large vehicle appears in a certain lane or a certain road section, it may indicate or prompt the vehicle to slow down or modify the navigation route to avoid the lane and/or road where the large vehicle is located. In some embodiments, a certain lane or a certain road section may be marked as a section for the large vehicle, and the navigation function entity may configure or generate the corresponding vehicle navigation information to instruct or prompt the vehicle to slow down at the related road section or modify the navigation route to avoid the related road section where the large vehicle appears. Thus, an impact of the road condition on the vehicle traffic is reduced. Similarly, when the roadside related information indicates that a certain lane or a certain road section requires the emergency vehicle to access priority, it may indicate or prompt to perform avoiding to ensure that the emergency vehicle accesses priority. Thus, the impact of the road condition on the vehicle traffic is reduced. It is worth noting that the term "large vehicle" may be understood in its usual meaning, and may be pre-defined based on a rated cargo capacity and/or size. The rated cargo capacity and/or size exceeding a predetermined threshold may be called a large lorry or an oversize vehicle. Due to safety requirements, the large vehicle have more driving limitations than an ordinary car. It should be understood that the "large vehicle" here may also be understood as other vehicles with driving limitations, such as an engineering vehicle, a construction vehicle, and so on.

In some embodiments, the traffic event may indicate an affected time span of the road section and/or the lane, for example, may indicate an affected start time, an affected end time, and the like. As an example, when the roadside related information indicates the affected start time and the affected end time, the navigation function entity may configure or generate the vehicle navigation information, based on information of the time, to indicate or prompt an optimized navigation route of the vehicle. Thus, efficiency of the vehicle traffic is improved. In some embodiments, the traffic event may indicate a confidence degree of the traffic event. The confidence degree here may describe a degree for credibility of the related traffic event. As an example, in a case of the roadside related information indicating the confidence degree of the traffic event, reliability of the vehicle navigation information may be further improved. In some cases, there may a case that the traffic event indicated by the roadside related information is not confidence, an impact of unreliable roadside related information on the vehicle traffic may be eliminated or reduced by evaluating the confidence degree. For example, when the traffic event indicates "raining", the confidence degree may be used to further identify a confidence degree of the "raining" event itself. As an example, the remote server may be configured to send the roadside related information to the navigation function entity when the confidence degree is equal to or higher than the predetermined threshold, and not to send the roadside related information to the navigation function entity when the confidence degree is less than the predetermined threshold. Thus, an impact of the traffic event with a low confidence degree on the vehicle traffic may be further avoided.

In some embodiments, the traffic event may indicate a metering for degree of impact of the traffic event. The metering of the degree of impact may provide a metering degree for the traffic event, for example, it may be measured by level to further quantify the impact. As an example, the degree may be classified as a sequence of first, second, third, etc., or as severe, general, or low, etc. For example, a degree higher than a first predetermined threshold is classified as the first level or the severe level. A degree between the first predetermined threshold and a second predetermined threshold is classified as the second level or the general level. A degree less than the second predetermined threshold is classified as the third level or the low level. It should be understood that explanation herein is made with three levels as example, and two or more levels may also be set as requirements. In some embodiments, the traffic event may indicate a data source and/or an ID of a data source device of the traffic event. For example, in a case of the traffic event from a predetermined device, an affected area of the event may be positioned based on the source device ID. The data of the traffic event may come from third-party data. As an example, when the roadside related information indicates the ID of the data source device, the road section and/or area affected by the traffic event may be conveniently positioned based on the ID of the data source device.

In some embodiments, the traffic flow may indicate a variety of traffic flow data. In some embodiments, the traffic flow may indicate the road section and/or the lane to which the traffic flow for statistics is directed. For example, the road section and/or the lane may be numbered according to a protocol, and the road section and/or the lane may also be described based on a position (for example, a latitude and a longitude) where the road is located. As an example, when the roadside related information indicates the road section and/or the lane to which the traffic flow is directed, the navigation function entity may conveniently configure or generate the vehicle navigation information based on the related information. In some embodiments, the road section and/or the lane may include a start point and an end point. In this case, the road or the area affected by the traffic flow may be easily identified based on the start point and the end point. In some embodiments, the traffic flow may indicate a time span for statistics. As an example, when roadside related information indicates a start time and an end time of the traffic flow for statistics, the navigation function entity may configure or generate the vehicle navigation information based on time information to indicate or prompt the vehicle to optimize the navigation route, so as to improve efficiency of the vehicle traffic. In some embodiments, the roadside related information may include a start time and an end time when the traffic flow exceeds a predetermined flow threshold, thus the information for navigation may be further optimized.

In some embodiments, the traffic flow may indicate a vehicle driving speed of the road section and/or the lane for statistics. For example, the vehicle driving speed may be an average speed at which the vehicle passes through, or a median of speeds at which the vehicle passes through, or the like. As an example, in a case where the roadside related information indicates the average speed at which the vehicle passes, the navigation function entity may configure or generate the vehicle navigation information based on information of the average speed. As an example, the navigation terminal may plan a driving route with a shortest time based on the average speed information to optimize the navigation route of the vehicle. In some embodiments, the traffic flow may indicate a vehicle density of the road section and/or the lane for statistics. As an example, in a case where the roadside related information indicates the vehicle density, the navigation function entity may configure or generate the vehicle navigation information based on information of the vehicle density. As an example, the navigation terminal may select a driving route with low vehicle density based on the information of the vehicle density. In some embodiments, the traffic flow may indicate a confidence degree of the traffic flow for statistics. The confidence degree here may describe a degree for credibility of the related traffic flow. For example, the confidence degree of the current statistical data may be determined based on historical data of the area. As an example, when the roadside related information indicates the confidence degree of the traffic flow, reliability of the vehicle navigation information may be further improved. In some cases, there may a case that the traffic flow indicated by the roadside related information is not confidence, an impact of unreliable roadside related information on the vehicle traffic may be eliminated or reduced by evaluating the confidence degree. In some embodiments, the remote server may be configured to send the roadside related information to the navigation function entity when the confidence degree is equal to or higher than a predetermined threshold; and not to send the roadside related information to the navigation function entity when the confidence degree is less than the predetermined threshold. Thus, an impact of the traffic flow data with a low confidence degree on the vehicle traffic may be further avoided.

In some embodiments, the traffic indication signal may indicate a variety of traffic signal data. As an example, when the roadside related information indicates a traffic signal, the navigation function entity may configure or generate the vehicle navigation information based on the traffic signal, which may further enhance or reduce an impact of the traffic signal on the vehicle traffic. In some embodiments, the traffic indication signal may indicate a road section, a lane and/or an intersection affected by the traffic indication signal. In some embodiments, the traffic indication signal may indicate an indication change period of the traffic indication signal. As an example, when the roadside related information indicates the indication change period of the traffic signal at the intersection, the indication change period of the traffic signal may be advantageously used for vehicle navigation, further enhancing the efficiency of the vehicle traffic. As an example, when the roadside related information indicates the traffic light signal at the intersection, in a condition of the vehicle is planning the driving route of the predetermined area, the driving route of the vehicle may be planned based on information of the traffic light signal at a certain intersection and/or certain intersections in the predetermined area. For example, when there are multiple driving routes for a vehicle driving from place A to place B in the predetermined area, the driving speed and driving route of the vehicle may be planned based on the roadside related information including the traffic light signal, to enable the intersection traffic signal light to be green when the vehicle is arriving the predetermined intersection, and the intersection where the intersection traffic signal light is red or yellow is avoided. For example, the predetermined traffic signal may be numbered in a predetermined format. For a specific traffic light signal, a maintaining time of the traffic light signal may be determined.

In some embodiments, the traffic indication signal may indicate a confidence degree of indicating the traffic indication signal. The confidence degree here may describe a degree for credibility of the related traffic indication signal. For example, in a case that the traffic signal light may be controlled and changed artificially, the obtained traffic signal light may deviate from an actual situation, and the obtained traffic indicator signal may be unreliable. As an example, when the roadside related information indicates the confidence degree of the traffic indication signal, the reliability of the vehicle navigation information may be further improved. In some cases, there may be a case that the traffic indication signal indicated by the roadside related information is unreliable, an impact of unreliable roadside related information on the vehicle traffic may be eliminated or reduced by evaluating the confidence degree. In some embodiments, the remote server may be configured to send the roadside related information to the navigation function entity when the confidence degree is equal to or higher than a predetermined threshold; and not to send the roadside related information to the navigation function entity when the confidence degree is less than the predetermined threshold. Thus, an impact of the traffic indication signal with a low confidence degree on the vehicle traffic may be further avoided. In some embodiments, the traffic indication signal may indicate a data source and/or an ID of a data source device of the traffic indication signal. As an example, when the roadside related information indicates the ID of the data source device, the road section and/or the intersection indicated by the traffic indication signal may be conveniently positioned based on the ID of the data source device.

In some embodiments, the roadside related information is received from a roadside subsystem or a roadside traffic signal indicating system. By using the roadside subsystem or the roadside traffic signal indicating system as a roadside information source, accuracy and real-time of the data may be ensured, and the real-time and reliability of the data obtained by the remote control server may be ensured. In some embodiments, the roadside related information may be provided by a trusted third-party platform. For example, without limitation, the third-party platform may be a traffic management information issuing platform of a traffic management department, a meteorological information issuing platform of a meteorological management department, or a water conservancy information issuing platform of a water conservancy management department, and so on.

In some embodiments, the method further includes: storing the plurality of pieces of first roadside related information in a plurality of first information queues, each first information queue storing the first roadside related information received from a same roadside subsystem or a same roadside traffic signal indicating system; generating the second roadside related information according to the latest first roadside related information stored in each of the first information queues. When the first roadside related information is received from multiple roadside subsystems or multiple roadside traffic signal indicating system, progressing the information from each roadside system in real time may be ensured by providing multiple first information queues. In addition, with generating the second roadside related information according to the latest first roadside related information stored in each of the first information queues, real-time of the information used for the configuration of the vehicle navigation information on the navigation function entity may be further improved. There may be multiple ways to obtain the latest first roadside related information. As an example, the first roadside related information from the roadside subsystem or the roadside traffic signal indicating system may include a time stamp and be stored in a corresponding first message queue among the plurality of first information queues. The latest first roadside related information may be obtained from the corresponding first message queue based on the timestamp. In another embodiment, the first roadside related information from the roadside subsystem or the roadside traffic signal indicating system may enter the corresponding first message queue in an order of receiving time, thus, the latest first roadside related information may be obtained based on a position where the first roadside related information is in the corresponding first message queue.

Multiple first information queues may dynamically adjust sizes of the information queues according to requirements such as a frequency of entering, so as to ensure real-time of the message. In some embodiments, the first roadside related information stored in the first information queue may also be configured for other purposes. For example, in a case of providing a confidence degree evaluation for the first roadside related information, the first roadside information may be configured for the confidence degree evaluation.

In some embodiments, the method may further include: storing the latest first roadside related information of each the first information queue into a second information queue; and generating the second roadside related information based on the second information queue. Therefore, it is convenient for the remote control server to process multiple queues in real time by using a concurrent mechanism, which may realize a conversion of processing frequency while ensuring the real-time of the message.

In some embodiments, the method may further include: performing a time delay compensation on the received first roadside related information. Through the time delay compensation for the first roadside related information, time sensitive of the generated second roadside related information may be further improved. In some scenarios with high real-time requirements, due to processes such as network transmission and message processing, there may be the time delay for the roadside related information received by the navigation function entity. The time delay may be compensated by setting a time delay compensation mechanism.

In some embodiments, the time delay includes a transmission delay from the roadside device to the remote control server, a data processing delay at the roadside device, the data processing delay at the remote control server, and the like. In some embodiments, the time delay may also include, for example, an estimated time delay caused by transmitting from the remote control server to the navigation function entity and then to the navigation terminal. Explanation will be made below by taking the traffic signal light with the high time sensitive requirement as an example. A countdown of the signal light is T when the message is actually sent by the roadside device. The transmission time from the roadside device to the remote control server is t1, and the data processing time at the remote control server is t2, and the transmission time from the remote control server to the navigation function entity is t3. In this case, the countdown of the signal light in the first roadside related information may be modified to T-(t1+t2+t3), which is sent to the navigation function entity as the second roadside related information. Thus, the real-time of the roadside related information at the navigation function entity may be ensured.

In some embodiments, the method may further include: performing confidence degree evaluation on the received first roadside related information to determine the confidence degree of the first roadside related information. The confidence degree is configured to filter the first roadside related information when generating the second roadside related information. The impact of the roadside related data with the low confidence degree on the vehicle traffic may be avoided through an analysis for the confidence degree. In actual applications, there may be situations where a running rule is broken. Take the traffic light as an example. In a condition of a timing dial of the signal light being normal, the countdowns of the red, yellow and green lights are fixed, and pushed to the navigation function entity according to a fixed pushing period at this time, which may meet the requirement for the real-time. However, when a dynamic timing dial of the signal light is turned on at this time or a handheld device makes color of the light to change, it may happen that the color of the light changes directly when the countdown does not reach 0. In some other embodiments, for the received roadside related information, the signal may be interfered in a progress of transmitting, or be attacked by a hacker, or have a fault, which may cause errors in the transmitted data. With performing the confidence degree evaluation on the obtained roadside related information, more reliable real-time information may be provided for the navigation function entity. In some embodiments, in a case of the first roadside related information including periodic information, the confidence degree evaluation may also consider multiple periods to determine the confidence degree based on whether the periodic change is regular. As an example, it may be considered to perform statistical analysis on multiple periods, for example, the corresponding confidence degree may be matched by probability distribution statistics based on mean analysis and variance analysis for multiple data. It should be understood that the confidence degree evaluation method described here is only exemplary, and other statistical analysis methods may also be used for the confidence degree evaluation.

FIG. 4 illustrates a flow chart of a method 400 for navigation applied to a navigation function entity according to some embodiments of the present disclosure. The method 400 may be implemented for the navigation function entity 240 of FIG. 2. It should be understood that although the method 400 is illustrated in a specific order, some steps in the method 400 may be performed in a different order from the illustrated order or in a parallel manner. The embodiments of the present disclosure are not limited in this respect.

At block 402, a navigation function entity receives roadside related information from a remote control server. The roadside related information at least includes position information of a road and driving related information related to the road. At block 404, information for vehicle navigation is configured based on the roadside related information. Since the navigation function entity configures or generates information for the vehicle navigation based on the roadside related information, in intelligent transportation, cooperation between the remote control server and the navigation function entity is further enhanced, real-time of the information for vehicle navigation is ensured.

In some embodiments, the roadside related information includes one or more of a traffic event, a traffic flow, and a traffic indication signal. Thus, various kinds of data related to the vehicle navigation, which is related to the traffic event, the traffic flow, and the traffic indication device, etc., may be provided in real time to the navigation function entity from, for example, a remote server. In some embodiments, data interaction types of remote control server-navigation function entity include the traffic event, the traffic flow, and the traffic indication signal. Therefore, the navigation function entity may configure the driving-related information related to the road efficiently and in real time, such as navigation information, to ensure real-timing of the information for navigation.

In some embodiments, the traffic event may indicate a variety of traffic event data. In some embodiments, the traffic event may indicate a road section and/or a lane affected by the traffic event. As an example, an area, the road section, and/or the lane where the traffic event occurs may be numbered according to a predetermined standard and/or protocol, and a related influence range may be obtained based on a number. In other examples, the area, the road section, and/or the lane where the traffic event occurs may be described based on a geographic position of the traffic event, such as a latitude and a longitude. For example, when the roadside related information indicates that a traffic event related to vehicle driving occurs on a certain road section, the traffic event information may indicate the affected road section and/or lane, and the navigation function entity may configure or generate vehicle navigation information, based on the related affected road section and/or lane, to instruct or prompt the vehicle to avoid the affected road section and/or lanes. Thus, an impact of the traffic event on the vehicle traffic is reduced.

In some embodiments, the traffic event may indicate a weather condition at a predetermined road section. In some embodiments, the weather condition may include rain, snow, fog, haze, hail, wind, sandstorm, and the like. For example, various kinds of weather conditions may be numbered according to a predetermined standard and/or protocol, and a corresponding weather condition may be obtained based on a number. As an example, when the roadside related information indicates that a weather condition related to vehicle driving occurs in the predetermined road section, information of the weather condition may indicate an affected road area, and the navigation function entity may configure or generate the vehicle navigation information, based on the related affected road area, to instruct or prompt the vehicle to avoid the area affected by the weather condition. Thus, an impact of the weather condition on the vehicle traffic is reduced.

In some embodiments, the traffic event may indicate a road condition at the road section and/or the lane. In some embodiments, the road condition may be selected from the road having an abandoned object, the road having a pedestrian, the road having an animal, the road being slippery, the road being icy, the road breaking out of fire, and a road facility being damaged. For example, various weather conditions may be numbered according to a predetermined standard and/or protocol, and a corresponding road condition may be obtained based on a number. As an example, when the roadside related information indicates that the spatter affecting the driving of the vehicle appears in a certain lane, the navigation function entity may configure or generate the vehicle navigation information, based on the road condition of the road with the spatter, to indicate or prompt the vehicle to avoid the lane affected by the road condition. Thus, an impact of the road condition on the vehicle traffic is reduced.

In some embodiments, the traffic event may indicate a vehicle condition at the road section and/or the lane. The vehicle condition may include, for example, an abnormal vehicle condition that affects the driving of the vehicle. For example, without limitation, the traffic event may indicate the vehicle driving beyond a predetermined speed threshold, the vehicle driving below a predetermined speed threshold, the vehicle stopping driving, the vehicle driving in a direction not allowed by traffic regulations, the emergency vehicle requiring priority access, and large vehicle identification. For example, various vehicle conditions may be numbered according to a predetermined standard and/or a protocol, and a corresponding vehicle condition may be obtained based on a number. As an example, when the roadside related information indicates that the abnormal vehicle condition occurs in a certain lane, the navigation function entity may configure or generate the vehicle navigation information based on the abnormal vehicle condition. For example, in some embodiments, when the roadside related information indicates that the abnormal vehicle condition (for example, the vehicle driving over speed, the vehicle stopping, the vehicle driving at low speed, the vehicle driving in the direction not allowed by traffic regulations) occurs, the navigation function entity may configure or generate the corresponding vehicle navigation information to indicate or prompt the vehicle to slow down or modify a navigation route to avoid the lane and/or the road with the abnormal vehicle condition. As an example, when the roadside related information indicates that a large vehicle appears in a certain lane or a certain road section, it may indicate or prompt the vehicle to slow down or modify the navigation route to avoid the lane and/or road with the abnormal vehicle condition. In some embodiments, a certain lane or a certain road section may be marked as a section for the large vehicle, and the navigation function entity may configure or generate the corresponding vehicle navigation information to instruct or prompt the vehicle to slow down at the related road section or modify the navigation route to avoid the related road section where the large vehicle appears. Thus, an impact of the road condition on the vehicle traffic is reduced. Similarly, when the roadside related information indicates that a certain lane or a certain road section requires the emergency vehicle to access priority, it may indicate or prompt to perform avoiding to ensure that the emergency vehicle accesses priority. Thus, the impact of the road condition on the vehicle traffic is reduced.

In some embodiments, the traffic event may indicate an affected time span of the road section and/or the lane, for example, may indicate an affected start time, an affected end time, and the like. As an example, when the roadside related information indicates the affected start time and the affected end time, the roadside related information, based on the times, for generating the vehicle navigation information may be provided to further improve efficiency of the vehicle traffic. In some embodiments, the traffic event may indicate a confidence degree of the traffic event. The confidence degree here may describe a degree for credibility of the related traffic event. As an example, in a case of the roadside related information indicating the confidence degree of the traffic event, reliability of the vehicle navigation information may be further improved. In some cases, there may a case that the traffic event indicated by the roadside related information is not confidence, an impact of unreliable roadside related information on the vehicle traffic may be eliminated or reduced by evaluating the confidence degree.

In some embodiments, the traffic event may indicate a metering for degree of impact of the traffic event. The metering of the degree of impact may provide a metering degree for the traffic event, for example, it may be measured by level to further quantify the impact. In some embodiments, the traffic event may indicate a data source and/or an ID of a data source device of the traffic event. For example, in a case of the traffic event from a predetermined device, an affected area of the event may be positioned based on the source device ID. The data of the traffic event may come from third-party data. As an example, when the roadside related information indicates the ID of the data source device, the road section and/or area affected by the traffic event may be conveniently positioned based on the ID of the data source device.

In some embodiments, the traffic flow may indicate a variety of traffic flow data. In some embodiments, the traffic flow may indicate the road section and/or the lane to which the traffic flow for statistics is directed. For example, the road section and/or the lane may be numbered according to a protocol, and the road section and/or the lane may also be described based on a position (for example, a latitude and a longitude) where the road is located. As an example, when the roadside related information indicates the road section and/or the lane to which the traffic flow is directed, the navigation function entity may conveniently configure or generate the vehicle navigation information based on the related information. In some embodiments, the road section and/or the lane may include a start point and an end point. In this case, the road or the area affected by the traffic flow may be easily identified based on the start point and the end point. In some embodiments, the traffic flow may indicate a time span for statistics. As an example, the vehicle navigation information may be configured or generated based on time information to indicate or prompt the vehicle to optimize the navigation route, so as to improve efficiency of the vehicle traffic. In some embodiments, the roadside related information may include a start time and an end time when the traffic flow exceeds a predetermined flow threshold, thus the information for navigation may be further optimized.

In some embodiments, the traffic flow may indicate a vehicle driving speed of the road section and/or the lane for statistics. For example, the vehicle driving speed may be an average speed at which the vehicle passes through, or a median of speeds at which the vehicle passes through, or the like. In some embodiments, the traffic flow may indicate a vehicle density of the road section and/or the lane for statistics. In some embodiments, the traffic flow may indicate a confidence degree of the traffic flow for statistics. The confidence degree here may describe a degree for credibility of the related traffic flow. For example, the confidence degree of the current statistical data may be determined based on historical data of the area. As an example, when the roadside related information indicates the confidence degree of the traffic flow, reliability of the vehicle navigation information may be further improved. In some cases, there may a case that the traffic flow indicated by the roadside related information is not confidence, an impact of unreliable roadside related information on the vehicle traffic may be eliminated or reduced by evaluating the confidence degree. Thus, an impact of the traffic flow data with a low confidence degree on the vehicle traffic may be further avoided.

In some embodiments, the roadside related information may be generated at one or more roadside subsystems and/or one or more roadside traffic signal indicating systems. The roadside subsystem and/or the roadside traffic signal indicating system include a roadside signal collector for obtaining roadside related information and a roadside computing unit for formatting and encoding the obtained information and sending the encoded signal to the remote control server.

In some embodiments, configuring the information for vehicle navigation includes configuring one or more of the following for vehicle driving: a road route for vehicle driving; a lane for vehicle driving; a speed for vehicle driving; and a timing for vehicle driving. As the foregoing, the navigation function entity may configure information for the vehicle navigation based on the roadside related information. Due to the real-time of the roadside related information, the roadside related information may be configured for vehicle navigation control. As an example, when the vehicle intends to drive from position A to position B, the navigation function entity may set and/or change the route for the vehicle driving, the lane for the vehicle driving, the speed at which the vehicle drives, and the like based on the roadside related information. As another example, when the roadside related information indicates that a certain traffic event occurs when driving from position A to position B and the traffic is stagnant, the navigation function entity may give a time suggestion for the vehicle passing according to an elimination time of the traffic event.

In some embodiments, configuring the information for vehicle navigation includes: in response to the roadside related information, prompting or instructing a vehicle to perform one or more of the following on a predetermined road and/or at a predetermined intersection: changing a speed of the vehicle; changing a driving route; and changing a driving lane. As an example, when the vehicle intends to drive from position A to position B and passes through multiple traffic light intersections, the navigation function entity may set and/or suggest the speed of the vehicle driving on a predetermined road section, according to the roadside related information, to ensure that the vehicle smoothly passes the predetermined intersection without waiting for a red light at the intersection. As another example, the navigation function entity may also give the timing of the vehicle driving, for example, it may suggest that the vehicle arrive at the predetermined intersection at a predetermined time to avoid the red light at the predetermined intersection.

FIG. 5 illustrates a flow chart of a method 500 for navigation applied to a roadside device according to some embodiments of the present disclosure. The method 500 may be implemented for the roadside subsystem 210 or the roadside traffic signal indicating system 220 of FIG. 2. It should be understood that although the method 500 is illustrated in a specific order, some steps in the method 500 may be performed in a different order from the illustrated order or in a parallel manner. The embodiments of the present disclosure are not limited in this respect.

At block 502, roadside related information encoded in a predetermined format is generated. The roadside related information may at least include position information of a road and driving related information related to the road. At block 504, the generated roadside related information is sent to a navigation function entity. The navigation function entity may configure information for the vehicle navigation based on the roadside related information. Since the roadside related information is encoded in the predetermined format and is sent to the navigation function entity, the roadside related information may be configured by the navigation function entity efficiently and in real time for the navigation of the transportation. Thus, security and navigation efficiency of the navigation is ensured. The roadside related information may be encoded in various formats, for example, an appropriate data format may be adopted based on a device model of the roadside device, a communication protocol and/or standard supported by the roadside device, and a device standard or protocol. For example, without limitation, the data may be in a format such as PB or ASN.

In some embodiments, the roadside related information encoded in the predetermined format includes one or more of a traffic event, a traffic flow, and a traffic indication signal. Thus, various kinds of data related to the vehicle navigation, which is related to the traffic event, the traffic flow, and the traffic indication device, etc., may be provided in real time to a remote server from, for example, the roadside device. In some embodiments, data interaction types of road-remote control server-navigation function entity include the traffic event, the traffic flow, and the traffic indication signal. Therefore, the navigation function entity may configure the driving-related information related to the road efficiently and in real time, such as navigation information, to ensure real-timing of the information for navigation.

In some embodiments, the traffic event may indicate a variety of traffic event data. In some embodiments, the traffic event may indicate a road section and/or a lane affected by the traffic event. As an example, an area, the road section, and/or the lane where the traffic event occurs may be numbered according to a predetermined standard and/or protocol, and a related influence range may be obtained based on a number. In other examples, the area, the road section, and/or the lane where the traffic event occurs may be described based on a geographic position of the traffic event, such as a latitude and a longitude. For example, when the roadside related information indicates that a traffic event related to vehicle driving occurs on a certain road section, the traffic event information may indicate the affected road section and/or lane, and the navigation function entity may configure or generate vehicle navigation information, based on the related affected road section and/or lane, to instruct or prompt the vehicle to avoid the affected road section and/or lanes. Thus, an impact of the traffic event on the vehicle traffic is reduced.

In some embodiments, the traffic event may indicate a weather condition at a predetermined road section. In some embodiments, the weather condition may include rain, snow, fog, haze, hail, wind, sandstorm, and the like. For example, various kinds of weather conditions may be numbered according to a predetermined standard and/or protocol, and a corresponding weather condition may be obtained based on a number. As an example, when the roadside related information indicates that a weather condition related to vehicle driving occurs in the predetermined road section, information of the weather condition may indicate an affected road area, and the navigation function entity may configure or generate the vehicle navigation information, based on the related affected road area, to instruct or prompt the vehicle to avoid the area affected by the weather condition. Thus, an impact of the weather condition on the vehicle traffic is reduced.

In some embodiments, the traffic event may indicate a road condition at the road section and/or the lane. In some embodiments, the road condition may be selected from the road having an abandoned object, the road having a pedestrian, the road having an animal, the road being slippery, the road being icy, the road breaking out of fire, and a road facility being damaged. For example, various weather conditions may be numbered according to a predetermined standard and/or protocol, and a corresponding road condition may be obtained based on a number. As an example, when the roadside related information indicates that the spatter affecting the driving of the vehicle appears in a certain lane, the navigation function entity may configure or generate the vehicle navigation information, based on the road condition of the road with the spatter, to indicate or prompt the vehicle to avoid the lane affected by the road condition. Thus, an impact of the road condition on the vehicle traffic is reduced.

In some embodiments, the traffic event may indicate a vehicle condition at the road section and/or the lane. The vehicle condition may include, for example, an abnormal vehicle condition that affects the driving of the vehicle. For example, without limitation, the traffic event may indicate the vehicle driving beyond a predetermined speed threshold, the vehicle driving below a predetermined speed threshold, the vehicle stopping driving, the vehicle driving in a direction not allowed by traffic regulations, the emergency vehicle requiring priority access, and large vehicle identification. For example, various vehicle conditions may be numbered according to a predetermined standard and/or a protocol, and a corresponding vehicle condition may be obtained based on a number. As an example, when the roadside related information indicates that the abnormal vehicle condition occurs in a certain lane, the navigation function entity may configure or generate the vehicle navigation information based on the abnormal vehicle condition. For example, in some embodiments, when the roadside related information indicates that the abnormal vehicle condition (for example, the vehicle driving over speed, the vehicle stopping, the vehicle driving at low speed, the vehicle driving in the direction not allowed by traffic regulations) occurs, the navigation function entity may configure or generate the corresponding vehicle navigation information to indicate or prompt the vehicle to slow down or modify a navigation route to avoid the lane and/or the road with the abnormal vehicle condition. As an example, when the roadside related information indicates that a large vehicle appears in a certain lane or a certain road section, it may indicate or prompt the vehicle to slow down or modify the navigation route to avoid the lane and/or road with the abnormal vehicle condition. In some embodiments, a certain lane or a certain road section may be marked as a section for the large vehicle, and the navigation function entity may configure or generate the corresponding vehicle navigation information to instruct or prompt the vehicle to slow down at the related road section or modify the navigation route to avoid the related road section where the large vehicle appears. Thus, an impact of the road condition on the vehicle traffic is reduced. Similarly, when the roadside related information indicates that a certain lane or a certain road section requires the emergency vehicle to access priority, it may indicate or prompt to perform avoiding to ensure that the emergency vehicle accesses priority. Thus, the impact of the road condition on the vehicle traffic is reduced.

In some embodiments, the traffic event may indicate an affected time span of the road section and/or the lane, for example, may indicate an affected start time, an affected end time, and the like. As an example, when the roadside related information indicates the affected start time and the affected end time, the roadside related information, based on the times, for generating the vehicle navigation information may be provided to further improve efficiency of the vehicle traffic. In some embodiments, the traffic event may indicate a confidence degree of the traffic event. The confidence degree here may describe a degree for credibility of the related traffic event. As an example, in a case of the roadside related information indicating the confidence degree of the traffic event, reliability of the vehicle navigation information may be further improved. In some cases, there may a case that the traffic event indicated by the roadside related information is not confidence, an impact of unreliable roadside related information on the vehicle traffic may be eliminated or reduced by evaluating the confidence degree.

In some embodiments, the traffic event may indicate a metering for degree of impact of the traffic event. The metering of the degree of impact may provide a metering degree for the traffic event, for example, it may be measured by level to further quantify the impact. In some embodiments, the traffic event may indicate a data source and/or an ID of a data source device of the traffic event. For example, in a case of the traffic event from a predetermined device, an affected area of the event may be positioned based on the source device ID. The data of the traffic event may come from third-party data. As an example, when the roadside related information indicates the ID of the data source device, the road section and/or area affected by the traffic event may be conveniently positioned based on the ID of the data source device.

In some embodiments, the traffic flow may indicate a variety of traffic flow data. In some embodiments, the traffic flow may indicate the road section and/or the lane to which the traffic flow for statistics is directed. For example, the road section and/or the lane may be numbered according to a protocol, and the road section and/or the lane may also be described based on a position (for example, a latitude and a longitude) where the road is located. As an example, when the roadside related information indicates the road section and/or the lane to which the traffic flow is directed, the navigation function entity may conveniently configure or generate the vehicle navigation information based on the related information. In some embodiments, the road section and/or the lane may include a start point and an end point. In this case, the road or the area affected by the traffic flow may be easily identified based on the start point and the end point. In some embodiments, the traffic flow may indicate a time span for statistics. As an example, the vehicle navigation information may be configured or generated based on time information to indicate or prompt the vehicle to optimize the navigation route, so as to improve efficiency of the vehicle traffic. In some embodiments, the roadside related information may include a start time and an end time when the traffic flow exceeds a predetermined flow threshold, thus the information for navigation may be further optimized.

In some embodiments, the traffic flow may indicate a vehicle driving speed of the road section and/or the lane for statistics. For example, the vehicle driving speed may be an average speed at which the vehicle passes through, or a median of speeds at which the vehicle passes through, or the like. In some embodiments, the traffic flow may indicate a vehicle density of the road section and/or the lane for statistics. In some embodiments, the traffic flow may indicate a confidence degree of the traffic flow for statistics. The confidence degree here may describe a degree for credibility of the related traffic flow. For example, the confidence degree of the current statistical data may be determined based on historical data of the area. As an example, when the roadside related information indicates the confidence degree of the traffic flow, reliability of the vehicle navigation information may be further improved. In some cases, there may a case that the traffic flow indicated by the roadside related information is not confidence, an impact of unreliable roadside related information on the vehicle traffic may be eliminated or reduced by evaluating the confidence degree. Thus, an impact of the traffic flow data with a low confidence degree on the vehicle traffic may be further avoided.

In some embodiments, the roadside related information may be generated at one or more roadside subsystems and/or one or more roadside traffic signal indicating systems. The roadside subsystem and/or the roadside traffic signal indicating system include a roadside signal collector for obtaining roadside related information and a roadside computing unit for formatting and encoding the obtained information and sending the encoded signal to the remote control server.

In some embodiments, the method may further include: performing confidence degree evaluation on the generated roadside related information to determine the confidence degree of the roadside related information. Thus, the confidence degree of the generated roadside related information may be evaluated, so as to improve the reliability of the roadside related information. The impact of the roadside related data with the low confidence degree on the vehicle traffic may be avoided through an analysis for the confidence degree. In some embodiments, in a case of the roadside related information including periodic information, the confidence degree evaluation may also consider multiple periods to determine the confidence degree based on whether the periodic change is regular. As an example, it may be considered to perform statistical analysis on multiple periods, for example, the corresponding confidence degree may be matched by probability distribution statistics based on mean analysis and variance analysis for multiple data. It should be understood that the confidence degree evaluation method described here is only exemplary, and other statistical analysis methods may also be used for the confidence degree evaluation.

### Examples of apparatus and device

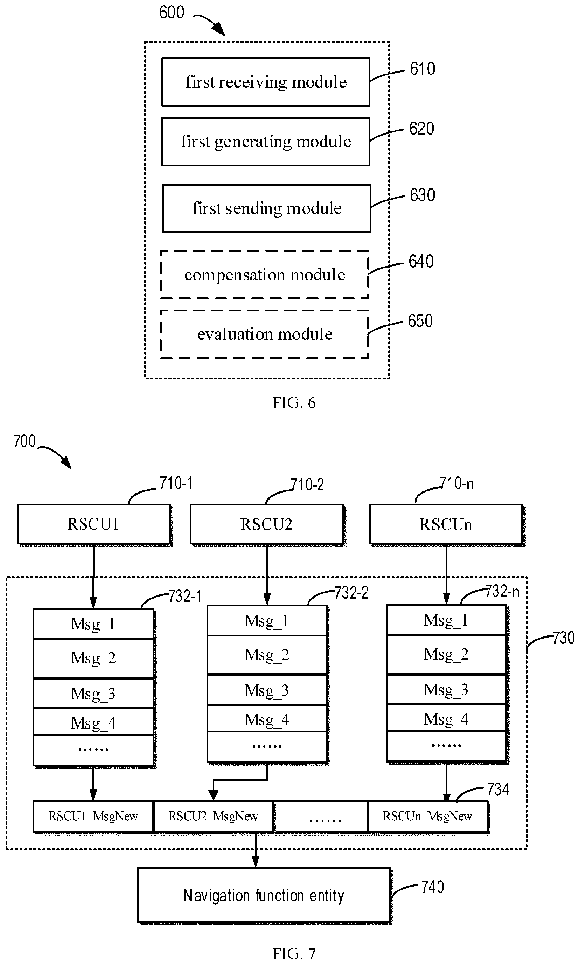

FIG. 6 illustrates a lock diagram of an apparatus 600 for navigation applied to a remote control server according to some embodiments of the present disclosure. The apparatus 600 may be included in the remote control server 130, 230 of FIGs. 1-2 or implemented as the remote control server 130, 230 of FIGs. 1-2.

As illustrated FIG. 6, the apparatus 600 includes a first receiving module 610, a first generating module 620 and a first sending module 630. The first receiving module 610 is configured to receive a plurality of pieces of first roadside related information encoded in a predetermined format. The first roadside related information at least includes position information of a road and driving related information related to the road. The first generating module 620 is configured to generate second roadside related information according to the plurality of pieces of first roadside related information. The first sending module 630 is configured to send the second roadside related information to a navigation function entity. The second roadside related information is configured for configuration of vehicle navigation information on the navigation function entity. The navigation function entity may configure or generate information for the vehicle navigation based on the roadside related information. The roadside related information may be configured by the navigation function entity efficiently and in real time for the navigation of the transportation. Thus, security and navigation efficiency of the navigation is ensured.

In some embodiments, the first roadside related information includes one or more of a traffic event, a traffic flow, and a traffic indication signal.

In some embodiments, the traffic event indicates one or more of: a road section and/or a lane affected by the traffic event; a weather condition at the road section; a road condition at the road section and/or the lane; a vehicle condition at the road section and/or the lane; an affected time span of the road section and/or the lane; a confidence degree of the traffic event; a data source and/or an ID of a data source device of the traffic event; and a metering for degree of impact of the traffic event.

In some embodiments, the weather condition includes one or more of rain, snow, fog, haze, hail, wind and sandstorm.

In some embodiments, the road condition includes one or more of the road having an abandoned object, the road having a pedestrian, the road having an animal, the road being slippery, the road being icy, the road breaking out of fire, a road facility being damaged.

In some embodiments, the vehicle condition includes one or more of the vehicle driving beyond a predetermined speed threshold, the vehicle driving below a predetermined speed threshold, the vehicle stopping driving, the vehicle driving in a direction not allowed by traffic regulations, the emergency vehicle requiring priority access, and large vehicle identification.

In some embodiments, the traffic flow indicates one or more of the road section and/or the lane to which the traffic flow is directed; a time span; a vehicle driving speed of the road section and/or the lane; a vehicle density of the road section and/or the lane; a data source and/or an ID of a data source device of the traffic flow; and a confidence degree of the traffic flow.

In some embodiments, the traffic indication signal indicates one or more of: a road section, a lane and/or an intersection affected by the traffic indication signal; an indication change period of the traffic indication signal; a data source and/or an ID of a data source device of the traffic indication signal; and a confidence degree of indicating the traffic indication signal.

In some embodiments, the first receiving module is configured to receive each piece of first roadside related information from one or more roadside subsystems or one or more roadside traffic signal indicating systems.

In some embodiments, the roadside related information may be received from one or more roadside subsystems or one or more roadside traffic signal indicating systems. In some embodiments, the roadside related information may be provided by a trusted third-party platform. For example, without limitation, the third-party platform may be a traffic management information issuing platform of a traffic management department, a meteorological information issuing platform of a meteorological management department, or a water conservancy information issuing platform of a water conservancy management department, and so on.

In some embodiments, as illustrated in FIG.6, the apparatus further includes a compensation module 640. The compensation module 640 is configured to perform a time delay compensation on the received roadside related information. In some embodiments, the time delay may include transmission delay and processing time. The real-time may be further improved by setting a time delay compensation mechanism.

In some embodiments, as illustrated in FIG.6, the apparatus further includes an evaluation module 650. The evaluation module 650 is configured to perform confidence degree evaluation on the first roadside related information to determine the confidence degree of the first roadside related information. The confidence degree is configured to filter the first roadside related information when generating the second roadside related information. With setting up a confidence degree evaluation mechanism, credibility of the roadside related information may be further improved, and an impact of unreliable roadside related information on the vehicle navigation may be reduced.

In some embodiments, in a case of the roadside related information including periodic information, the confidence degree evaluation may also consider multiple periods to determine the confidence degree based on whether the periodic change is regular. As an example, it may be considered to perform statistical analysis on multiple periods, for example, the corresponding confidence degree may be matched by probability distribution statistics based on mean analysis and variance analysis for multiple data. It should be understood that the confidence degree evaluation method described here is only exemplary, and other statistical analysis methods may also be used for the confidence degree evaluation.

In some embodiments, FIG. 7 illustrates a schematic diagram of a storage structure at the remote control server 730 for the first roadside related information. The remote control server 730 may include a plurality of first information queues 732-1, 732-2, ..., 732-n. The plurality of first information queues 732-1, 732-2, ..., 732-n are configured to store the plurality of pieces of first roadside related information each received from a corresponding roadside computing unit 710-1, 710-2...710-n of a same roadside subsystem or a same roadside traffic signal indicating system. The generating module in the remote control server 730 is configured to generate the second roadside related information according to the latest first roadside related information stored in each of the first information queues 732-1, 732-2, .., 732-n. When there are multiple roadside subsystems or roadside traffic signal indicating systems, by providing multiple first information queues, it may be ensured that information from each roadside system is processed in real time. Although in the illustrated embodiment each roadside computing unit provides one information queue, this is only exemplary; in other embodiments, multiple roadside computing units may share one message queue.

In some embodiments, the received roadside related information may be stored in a queue mechanism. In some embodiments, a size of the information queue may be dynamically adjusted according to requirements such as frequency of entering to ensure real-time of a message. The remote control server 730 may process multiple queues in real time by a concurrent mechanism, and generate the second roadside related information according to the latest first roadside related information stored in the first information queue.

In some embodiments, as illustrated in FIG. 7, the remote control server 730 may include a second information queue 734. The second information queue 734 is configured to store soring the latest first roadside related information of each the first information queue into a second information queue, and generate the second roadside related information based on the second information queue. The latest roadside related message in the second information queue is sent to the navigation function entity 740. The above mechanism may realize a matching between an input frequency from the roadside subsystem/roadside traffic signal indicating system and an output frequency of the remote control server, and the real-time of message processing may be ensured. It is worth noting that although one second message queue 734 is provided in the illustrated embodiment, this is merely exemplary, and multiple second message queues may be provided according to the amount of data.

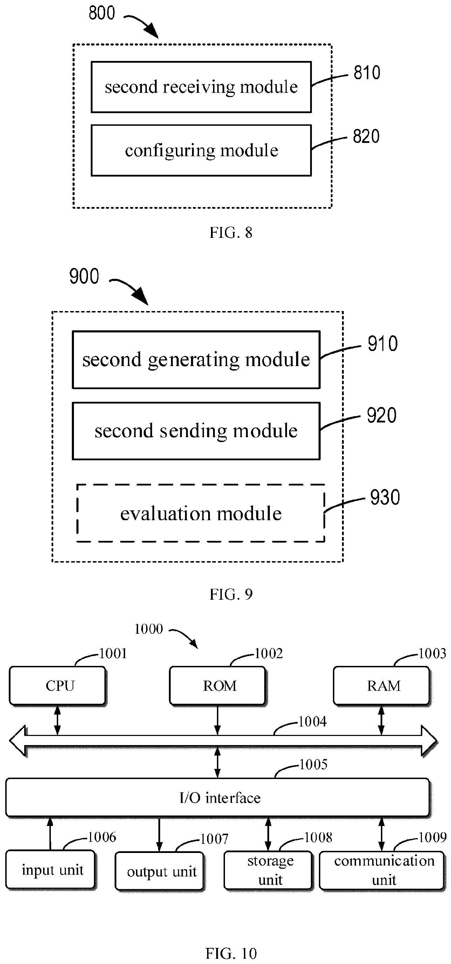

FIG. 8 illustrates a block diagram of an apparatus 800 for navigation on a side of a navigation function entity according to some embodiments of the present disclosure. The apparatus 800 may be included in the navigation function entity 140 in FIGs. 1-2 or implemented as the navigation function entity 140.

As illustrated in FIG. 8, the apparatus 800 may include a second receiving module 810 and a configuring module 820. The second receiving module 810 is configured to receive, by a navigation function entity, roadside related information from a remote control server. The roadside related information at least includes position information of a road and driving related information related to the road. The configuring module 820 is configured to configure information for vehicle navigation based on the roadside related information.

In some embodiments, the roadside related information encoded in a predetermined format includes one or more of a traffic event, a traffic flow, and a traffic indication signal.

In some embodiments, the traffic event indicates one or more of a road section and/or a lane affected by the traffic event; a weather condition at the road section; a road condition at the road section and/or the lane; a vehicle condition at the road section and/or the lane; an affected time span of the road section and/or the lane; a confidence degree of the traffic event; a data source and/or an ID of a data source device of the traffic event; and a metering for degree of impact of the traffic event.

In some embodiments, the weather condition includes one or more of rain, snow, fog, haze, hail, wind and sandstorm.

In some embodiments, the road condition includes one or more of the road having an abandoned object, the road having a pedestrian, the road having an animal, the road being slippery, the road being icy, the road breaking out of fire, and a road facility being damaged.

In some embodiments, the vehicle condition includes one or more of the vehicle driving beyond a predetermined speed threshold, the vehicle driving below a predetermined speed threshold, the vehicle stopping driving, the vehicle driving in a direction not allowed by traffic regulations, the emergency vehicle requiring priority access, and large vehicle identification.

In some embodiments, the traffic flow indicates one or more of the road section and/or the lane to which the traffic flow is directed; a time span; a vehicle driving speed of the road section and/or the lane; a vehicle density of the road section and/or the lane; a data source and/or an ID of a data source device of the traffic flow; and a confidence degree of the traffic flow.

In some embodiments, the traffic indication signal indicates one or more of: a road section, a lane and/or an intersection affected by the traffic indication signal; an indication change period of the traffic indication signal; a data source and/or an ID of a data source device of the traffic indication signal; and a confidence degree of indicating the traffic indication signal.

In some embodiments, the configuring module 820 is configured to configure one or more of the following for vehicle driving: a road route for vehicle driving; a lane for vehicle driving; a speed for vehicle driving; and a timing for vehicle driving.

In some embodiments, the configuring module 820 is configured to in response to the roadside related information, prompt or instruct a vehicle to perform one or more of the following on a predetermined road and/or at a predetermined intersection: changing a speed of the vehicle; changing a driving route; and changing a driving lane.

FIG. 9 illustrates a block diagram of an apparatus 900 for navigation on a roadside device according to some embodiments of the present disclosure. The apparatus 900 may be included in the roadside subsystems 110, 210, and roadside traffic signal indicating systems 120, 220 in FIGs. 1-2 or be implemented as the roadside subsystems 110, 210, and the roadside traffic signal indicating system 120, 220.

As illustrated in FIG. 9, the apparatus 900 may include a second generating module 910 and a second sending module 920. The second generating module 910 is configured to generate the roadside related information encoded in a predetermined format. The roadside related information at least includes position information of the road and driving related information related to the road. The second sending module 920 is configured to send the generated roadside related information to the remote control server. Based on the remote control server, the roadside related information may be efficiently and in real time configured at the navigation function entity for transportation navigation. Safety and efficiency of navigation may be ensured.

In some embodiments, the roadside related information encoded in a predetermined format includes one or more of a traffic event, a traffic flow, and a traffic indication signal.

In some embodiments, the traffic event indicates one or more of a road section and/or a lane affected by the traffic event; a weather condition at the road section; a road condition at the road section and/or the lane; a vehicle condition at the road section and/or the lane; an affected time span of the road section and/or the lane; a confidence degree of the traffic event; a data source and/or an ID of a data source device of the traffic event; and a metering for degree of impact of the traffic event.

In some embodiments, the weather condition includes one or more of rain, snow, fog, haze, hail, wind and sandstorm.

In some embodiments, the road condition includes one or more of the road having an abandoned object, the road having a pedestrian, the road having an animal, the road being slippery, the road being icy, the road breaking out of fire, and a road facility being damaged.

In some embodiments, the vehicle condition includes one or more of the vehicle driving beyond a predetermined speed threshold, the vehicle driving below a predetermined speed threshold, the vehicle stopping driving, the vehicle driving in a direction not allowed by traffic regulations, the emergency vehicle requiring priority access, and large vehicle identification.

In some embodiments, the traffic flow indicates one or more of the road section and/or the lane to which the traffic flow is directed; a time span; a vehicle driving speed of the road section and/or the lane; a vehicle density of the road section and/or the lane; a data source and/or an ID of a data source device of the traffic flow; and a confidence degree of the traffic flow.

In some embodiments, the traffic indication signal indicates one or more of: a road section, a lane and/or an intersection affected by the traffic indication signal; an indication change period of the traffic indication signal; a data source and/or an ID of a data source device of the traffic indication signal; and a confidence degree of indicating the traffic indication signal.

In some embodiments, the roadside related information may be received from one or more roadside subsystems and/or one or more roadside traffic signal indicating systems. In some embodiments, the roadside related information may be provided by a trusted third-party platform. For example, without limitation, the third-party platform may be a traffic management information issuing platform of a traffic management department, a meteorological information issuing platform of a meteorological management department, or a water conservancy information issuing platform of a water conservancy management department, and so on.

In some embodiments, the roadside related information may be generated at one or more roadside subsystems. In some embodiments, the roadside related information may be generated at one or more roadside traffic signal indicating systems. The roadside subsystem and/or the roadside traffic signal indicating system include a roadside signal collector for obtaining the roadside related information and a roadside computing unit for formatting and encoding the obtained information and sending the encoded signal to the remote control server.

In some embodiments, as illustrated in FIG. 9, the apparatus 900 may include an evaluation module 930. The evaluation module 930 is configured to perform confidence degree evaluation on the generated roadside related information to determine the confidence degree of the roadside related information. Thus, the confidence degree of the generated roadside related information may be evaluated, so as to improve the reliability of the roadside related information. The impact of the roadside related data with the low confidence degree on the vehicle driving may be avoided through an analysis for the confidence degree. In some embodiments, in a case of the roadside related information including periodic information, the confidence degree evaluation may also consider multiple periods to determine the confidence degree based on whether the periodic change is regular. As an example, it may be considered to perform statistical analysis on multiple periods, for example, the corresponding confidence degree may be matched by probability distribution statistics based on mean analysis and variance analysis for multiple data. It should be understood that the confidence degree evaluation method described here is only exemplary, and other statistical analysis methods may also be used for the confidence degree evaluation.

The present disclosure also provides an electronic device, a computer-readable storage medium, and a cloud control platform according to embodiments of the present disclosure.

FIG. 10 is a block diagram of an electronic device used to implement the method for vehicle navigation according to an embodiment of the present disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

FIG. 10 is a block diagram illustrating a computing device 1000 according to multiple embodiments of the disclosure. As illustrated in FIG. 10, the device 1000 includes a central processing unit (CPU) 1001, which may execute various appropriate acts and processing based on computer program instructions stored in a read-only memory (ROM) 1002 or computer program instructions loaded from a storage unit 1008 to a random-access memory (RAM) 1003. In the RAM 1003 may store various programs and data needed for the operation of the device 1000. The CPU 1001, the ROM 1002, and the RAM 1003 are connected to each other through a bus 1004. An input/output (I/O) interface 1005 is also connected to the bus 1004.

Multiple components in the device 1000 are connected to the I/O interface 1005, including: an input unit 1006, such as a keyboard, a mouse, etc.; an output unit 1007, such as various types of displays, speakers, etc.; the storage unit 1008, such as a disk, a CD, etc.; and a communication unit 1009, such as a network card, a modem, a wireless communication transceiver, etc.. The communication unit 1009 allows the device 1000 to exchange information/data with other devices via computer networks such as the Internet and/or various telecommunications networks.

The processing unit 1001 executes the various methods and procedures described above, such as the method 300, 400 or 500. For example, in some embodiments, the method 300, 400 or 500may be implemented as computer software programs, which are physically contained in a machine-readable medium, such as the storage unit 1008. In some embodiments, some or all of the computer programs may be loaded and/or installed on the device 1000 via the ROM 1002 and/or the communication unit 1009. The computer programs may execute one or more acts or steps of the method 300, 400 or 500 described above when loaded to the RAM 1003 and executed by the CPU 1001. Alternatively, in other embodiments, the CPU 1001 may be configured to execute the method 300, 400 or 500 by any other appropriate ways (such as, by means of a firmware).

The above functions described herein may be executed at least partially by one or more hardware logic components. For example, without limitation, exemplary types of hardware logic components, including a field-programmable gate array (FPGA), an application-specific integrated circuit (ASIC), an application specific standard product (ASSP), a system on chip (SOC), a load programmable logic device (CPLD) and so on, may be used.

The program codes for implementing the method of embodiments of the present disclosure may be written in any combination of one or more program languages. These program codes may be provided for a processor or a controller of a general-purpose computer, a special-purpose computer, or other programmable data-processing devices, such that the functions/operations regulated in the flow charts and/or block charts are implemented when the program codes are executed by the processor or the controller. The program codes may be completely executed on the machine, partly executed on the machine, partly executed on the machine as a standalone package and partly executed on a remote machine or completely executed on a remote machine or a server.

In the context of the present disclosure, the machine readable medium may be a tangible medium, which may include or store the programs for use of an instruction execution system, apparatus or device or for use in conjunction with the instruction execution system, apparatus or device. The machine readable medium may be a machine readable signal medium or a machine readable storage medium. The machine readable medium may include but not limited to electronic, magnetic, optical, electromagnetic, infrared, or semiconductor systems, apparatuses or devices, or any appropriate combination of the foregoing contents. A more detailed example of the machine readable storage medium includes electrical connections based on one or more lines, a portable computer disk, a hard disk, a random access memory (RAM), a read-only memory (ROM), an erasable programmable read only memory (an EPROM or a flash memory), an optical fiber, a compact disc read-only memory (CD-ROM), an optical storage device, a magnetic storage device, or any appropriate combination of the above contents.

A cloud control platform according to an embodiment of the present disclosure may include the above-mentioned electronic device or may be implemented as an electronic device. The cloud control platform according to the embodiments of the present disclosure may improve vehicle-road cooperation.

In addition, although respective act or step is described in a particular sequence, it should be understood that such act or step are required to be executed in the specified or sequential order as illustrated, or all illustrated acts or steps are required to be executed to achieve a desired result. Under certain environment, multitasking and parallel processing may be beneficial. In the same way, although several specific implementation details are included in the above discussion, these should not be interpreted as limitations of the scope of the present disclosure. Certain features described in the context of a single embodiment may also be in a combination manner to be implemented in a single implementation. On the contrary, the various features described in the context of a single implementation may also be implemented in multiple implementations individually or in any appropriate sub-combination.

Although language specific to structural features and/or method logic actions has been employed to describe the embodiments of the present disclosure, it should be understood that the subject matter defined in the appended claims is not necessarily limited to the specific features or acts described above. On the contrary, the specific features or acts described above are merely an exemplary form for implementing the claims.

## Claims

1. A method (300) for vehicle navigation, comprising:
receiving (302), by a remote control server, a plurality of pieces of first roadside related information encoded in a predetermined format, wherein the first roadside related information at least comprises position information of a road and driving related information related to the road;
generating (304) second roadside related information according to the plurality of pieces of first roadside related information; and
sending (306) the second roadside related information to a navigation function entity, wherein the second roadside related information is configured for configuration of vehicle navigation information on the navigation function entity.

2. The method according to claim 1, wherein the first roadside related information comprises one or more of a traffic event, a traffic flow, and a traffic indication signal.

3. The method according to claim 2, wherein the traffic event indicates one or more of:
a road section and/or a lane affected by the traffic event;
a weather condition at the road section;
a road condition at the road section and/or the lane;
a vehicle condition at the road section and/or the lane;
an affected time span of the road section and/or the lane;
a confidence degree of the traffic event;
a data source and/or an ID of a data source device of the traffic event; and
a metering for degree of impact of the traffic event; preferably
wherein,
the weather condition comprises one or more of rain, snow, fog, haze, hail, wind and sandstorm;
the road condition comprises one or more of the road having an abandoned object, the road having a pedestrian, the road having an animal, the road being slippery, the road being icy, the road breaking out of fire, and a road facility being damaged;
the vehicle condition comprises one or more of the vehicle driving beyond a predetermined speed threshold, the vehicle driving below a predetermined speed threshold, the vehicle stopping driving, the vehicle driving in a direction not allowed by traffic regulations, the emergency vehicle requiring priority access, and large vehicle identification; or

4. The method according to claim 2 or 3, wherein the traffic flow indicates one or more of:
the road section and/or the lane to which the traffic flow is directed;
a time span;
a vehicle driving speed of the road section and/or the lane;
a vehicle density of the road section and/or the lane;
a data source and/or an ID of a data source device of the traffic flow; and
a confidence degree of the traffic flow; and
wherein the traffic indication signal indicates one or more of:
a road section, a lane and/or an intersection affected by the traffic indication signal;
an indication change period of the traffic indication signal;
a data source and/or an ID of a data source device of the traffic indication signal; and
a confidence degree of indicating the traffic indication signal.

5. The method according to any one of claims 1-4, wherein
each piece of first roadside related information in the plurality of pieces of first roadside related information is received from a roadside subsystem or a roadside traffic signal indicating system.

6. The method according to claim 5, further comprising:
storing the plurality of pieces of first roadside related information in a plurality of first information queues, each first information queue storing the first roadside related information received from a same roadside subsystem or a same roadside traffic signal indicating system;
generating the second roadside related information according to the latest first roadside related information stored in each of the first information queues.

7. The method according to claim 6, wherein generating the second roadside related information according to the latest first roadside related information stored in each of the first information queues comprises:
storing the latest first roadside related information of each the first information queue into a second information queue; and
generating the second roadside related information based on the second information queue.

8. The method according to any of claims 5-7, further comprising:
performing a time delay compensation on the first roadside related information.

9. The method according to any of claims 5-8, further comprising:
performing confidence degree evaluation on the first roadside related information to determine the confidence degree of the first roadside related information, wherein the confidence degree is configured to filter the first roadside related information when generating the second roadside related information.

10. The method according to claim 9, wherein the confidence degree evaluation comprises:
in a case of the first roadside related information comprising periodic information, obtaining multiple periodic information, and performing the confidence degree evaluation based on a regularity of changes in the periodic information.

11. An apparatus for vehicle navigation, configured to implement the method according to any of claims 1 to 10.

12. A method (400) for vehicle navigation, comprising:
receiving (402), by a navigation function entity, roadside related information from a remote control server, wherein the roadside related information at least comprises position information of a road and driving related information related to the road; and
configuring (404) information for vehicle navigation based on the roadside related information.

13. An apparatus (800) for vehicle navigation, comprising:
a second receiving module (810), configured to receive, by a navigation function entity, roadside related information from a remote control server, wherein the roadside related information at least comprises position information of a road and driving related information related to the road; and
a configuring module (820), configured to configure information for vehicle navigation based on the roadside related information.

14. A computer readable storage medium storing a computer program, wherein the computer program is configured to implement the method according to any one of claims 1 to 10 or the method according to claim 12 when executed by a progress.

15. A system for vehicle navigation, comprising:
one or more remote control servers, comprising the apparatus according to claim 11; and
a navigation function entity, comprising the apparatus according to claim 13.
